# EUROPÄISCHE PATENTSCHRIFT

(11) **EP 3 984 099 B1**
(45) Veröffentlichungstag und Bekanntmachung des Hinweises auf die Patenterteilung: **12.11.2025**
(21) Anmeldenummer: 20724100.1
(22) Anmeldetag: 06.05.2020
(51) Int. Cl.: H01R 12/51, G01D 11/00

(54) **VORRICHTUNG ZUM ELEKTRISCHEN KONTAKTIEREN DER STEUER-/AUSWERTEELEKTRONIK EINES FELDGERÄTS**
APPARATUS FOR ELECTRICALLY CONTACTING THE CONTROL/EVALUATION ELECTRONICS OF A FIELD DEVICE
DISPOSITIF DESTINÉ À METTRE EN CONTACT ÉLECTRIQUE L'ÉLECTRONIQUE DE COMMANDE/D'ÉVALUATION D'UN APPAREIL DE TERRAIN

(30) Priorität: 13.06.2019 DE 102019116154
(43) Veröffentlichungstag der Anmeldung: 20.04.2022
(73) Patentinhaber: Endress+Hauser SE+Co. KG, 79689 Maulburg (DE)
(72) Erfinder: DÖTSCH, Michael, 79736 Rickenbach (DE); SCHMIDT, Robert, 79650 Schopfheim (DE); LEISINGER, Ralf, 79699 Wieslet (DE)
(74) Vertreter: Endress + Hauser Group Services (Deutschland) AG+Co. KG
(86) Internationale Anmeldenummer: PCT/EP2020/062527
(87) Internationale Veröffentlichungsnummer: WO 2020/249321

(56) Entgegenhaltungen:
- EP-A1- 2 893 299
- DE-A1- 102010 040 866
- DE-A1- 102016 106 900
- DE-A1- 19 757 938
- DE-A1- 4 038 362
- DE-U- 1 893 582

## Beschreibung

Die Erfindung betrifft eine Vorrichtung zum elektrischen Kontaktieren der Steuer-/Auswerteelektronik eines Feldgeräts der Automatisierungstechnik mit einer externen Energieversorgung und/oder Steuerung.

In der Prozessautomatisierung ebenso wie in der Fertigungsautomatisierung werden vielfach Feldgeräte zur Erfassung und/oder Beeinflussung von physikalischen, chemischen oder biologischen Prozessgrößen eingesetzt. Zur Erfassung der Prozessgrößen dienen Messgeräte. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung der Prozessgrößen werden Aktorsysteme verwendet. Beispiele für Aktoren sind Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind. Als Feldgeräte werden allgemein gesprochen Geräte bezeichnet, die in der Nähe des Prozesses oder der Anlage eingesetzt werden und die prozess- oder anlagerelevante Informationen liefern oder verarbeiten.

Um Feldgeräte der Automatisierungstechnik auch in gasexplosionsgefährdeten Bereichen einsetzen zu können, müssen die elektrischen Bauteile der Feldgeräte in der geeigneten Ex-Zündschutzart, z.B. der Zündschutzart "erhöhte Sicherheit Ex e" ausgelegt sein. Untergruppen dieser Norm gelten für definierte elektrische Komponenten. Beispielsweise gilt die Norm Ex-ec (DIN EN 60079-7) für Verbindungen, Leiter, Wicklungen, Lampen und Batterien einschließlich der Halbbleiter- oder Elektrolytkondensatoren. So ist in dieser Norm u.a. festgelegt, wie groß der Abstand zwischen den Anschlussklemmen der auf einer Leiterkarte angeordneten Steuer-/Auswerteelektronik eines Feldgeräts sein muss, wenn das Feldgerät an eine Netzspannung von 230V AC angeschlossen werden soll. Bei Einhaltung des in der Norm vorgeschriebenen Abstands ist sichergestellt, dass keine Kriechströme zwischen den Anschlussklemmen fließen, wodurch ein Kurzschluss mit Funkenbildung vermieden wird. Bei Einhaltung der geforderten Kriechstrecke ist somit in gasexplosionsgefährdeten Bereichen eine Explosionsgefahr ausgeschlossen. Die DE 10 2016 106 900 A1 beschreibt ein Verfahren zur Positionierung von Leiterplatten. Die DE 18 93 582 U offenbart eine Klemmleiste. Die DE 197 57 938 A1 beschreibt einen Isolationskamm für einen Multikontaktstecker.

Der Erfindung liegt die Aufgabe zugrunde, eine Vorrichtung zum elektrischen Kontaktieren der Steuer-/Auswerteelektronik eines Feldgeräts der Automatisierungstechnik mit einer externen Energieversorgung und/oder Steuerung vorzuschlagen, die für den explosionsgefährdeten Bereich einsetzbar ist.

Die Aufgabe wird gelöst durch eine Vorrichtung nach Anspruch 1. Weitere Ausführungsformen werden in den abhängigen Ansprüchen definiert.

Durch die Erfindung wird auf der direkten Verbindungslinie zwischen zwei Anschlussklemmen - also zwischen zwei benachbarten Lötpads der Anschlussklemmen, die auf der Leiterkarte angeordnet sind - neben der Kriechstrecke auf der Leiterkarte auch eine Luftstrecke ausgebildet. Da Luft einen höheren Widerstandswert als die Leiterkarte hat, wird die Kriechstrecke infolge der dazwischenliegenden Luftstrecke verlängert. Gleiches gilt natürlich auch für die Verlängerung der Kriechstrecke auf der Leiterkarte, da diese um die Ausnehmungen bzw. die Schlitze herumführt. Je nach Breite der Luftstrecke bzw. Breite und Länge der Ausnehmungen lässt sich mit der Erfindung eine vorgegebene Zündschutzart realisieren, ohne dass der Abstand zwischen zwei Anschlussklemmen vergrößert werden muss. Dies hat den Vorteil, dass die Dimensionierung erstens klein gehalten werden kann - was der fortschreitenden Miniaturisierung der Leiterkarten entgegenkommt - und dass gleiche Standardbauteile, hier z.B. ein- und derselbe Stecker, für mehrere Exschutz-Varianten eines Feldgeräts genutzt werden können.

Erfindungsgemäß wird eine längliche Komponente mit zwei einander gegenüberliegenden Oberflächen vorgeschlagen, wobei an einer der beiden Oberflächen der länglichen Komponente Stege vorgesehen sind, die so angeordnet und ausgestaltet sind, dass sie in die Ausnehmungen der Leiterkarte eingreifen bzw. einführbar sind. Es versteht sich von selbst, dass die längliche Komponente aus einem nicht-leifähigen Material gefertigt ist. Bevorzugt kommt diese Ausgestaltung zum Einsatz, wenn die Leiterkarte mit den Anschlussklemmen im Wesentlichen senkrecht zu der Bodenfläche eines Feldgerätegehäuses ausgerichtet ist und die Leiterkarte bis auf Höhe der Lötpads bzw. der Anschlussklemmen mit einem aus nicht-leitfähigem Material bestehenden Verguss aufgefüllt ist. Üblicherweise hat ein geeigneter Verguss eine Kriechstromfestigkeit - gekennzeichnet durch den Comparative Tracking Index CTI - von bevorzugt größer 500. Einen vergleichbaren Wert hat auch das Material, aus dem die längliche Komponente gefertigt ist.

Die Kriechstromfestigkeit kennzeichnet die Isolationsfestigkeit der Oberfläche (Kriechstrecke) von Isolierstoffen. Sie definiert den maximalen Kriechstrom, der sich unter genormten Prüfbedingungen in einer definierten Prüfanordnung einstellen darf. Während übliche Leiterkartenmaterialien einen CTI von unter 250, z.B. 125, aufweisen, haben als Vergussmasse genutzte Kunststoffe, wie Polyethylen, Polyesterharz, PTFE oder PBT, einen CTI von bevorzugt 500-600. Je höher der CTI der verwendeten Materialien bzw. des verwendeten Materials ist, umso kleiner kann der Abstand zwischen zwei Elektronikkomponenten, hier den Anschlussklemmen, zur Erfüllung einer vorgegebenen Zündschutzart ausgelegt sein.

Wird das Feldgerätegehäuse mit Verguss bis auf die Höhe der Ausnehmungen/Schlitze der in dem Feldgerätegehäuse senkrecht stehenden Leiterkarte aufgefüllt, so besteht die Gefahr, dass die durch die Ausnehmungen infolge der Kriechstrecke durch Luft erreichte hohe Kriechstromfestigkeit herabgesetzt wird. Dies ist der Fall, wenn Material der Vergussmasse in die Ausnehmungen/Schlitze eindringt. Der Grund ist die geringere Kriechfestigkeit des Vergusses im Vergleich zur Kriechfestigkeit der Luft.

Das Vorhandensein von Vergussmasse innerhalb der Ausnehmungen ist bei dem Vergießen der Leiterkarte durchaus wahrscheinlich. So unterliegen die Dosiermenge an Verguss ebenso wie die Dimensionierung des aufzufüllenden Innenraums des Feldgerätegehäuses gewissen Schwankungen. Da weiterhin stets alle elektrischen Anschlüsse/Lötpads und elektrische Komponenten der Leiterkarte durch den Verguss geschützt sein sollen, muss die Dosiermenge an einer ermittelten Obergrenze liegen. Aufgrund der Fertigungs- und Dosierfehler kann nicht ausgeschlossen werden, dass der Verguss die Ausnehmungen mehr oder weniger ausfüllt, wodurch die vormals für die Erfüllung der vorgegebenen Zündschutzart erreichte Kriechstromfestigkeit verringert wird.

Mit dem Einfügen der länglichen Komponente lässt sich dieser nicht akzeptable Missstand beseitigen, da die direkte Kriechstrecke zwischen zwei benachbarten Lötpads durch die aus den Ausnehmungen/Schlitzen herausragenden Stege verlängert wird. Es versteht sich von selbst, dass die Länge der Stege so gewählt ist, dass die Stege möglichst passgenau in den Ausnehmungen sitzen.

Erfindungsgemäß ist an der länglichen Komponente auf der Oberfläche, an der die Stege angeordnet sind, zumindest eine Anschlagstütze für die Leiterkarte vorgesehen und die Anschlagstütze so ausgestaltet, dass die Oberfläche der länglichen Komponente, die die Stege trägt, von der zugewandten Oberfläche der Leiterkarte einen definierten Abstand aufweist, und/oder ist zumindest einer der Stege in einem an die Oberfläche der länglichen Komponente angrenzenden Bereich als Anschlagstütze für die Leiterkarte ausgebildet, so dass die Oberfläche der länglichen Komponente, die die Stege trägt, von der zugewandten Oberfläche der Leiterkarte den definierten Abstand aufweist.

Erfindungsgemäß ist an der Oberfläche der länglichen Komponente, die die Stege trägt, zumindest eine Anschlagstütze zur Anlage an der Leiterkarte vorgesehen. Die Anschlagstütze ist so ausgestaltet, dass die Oberfläche der länglichen Komponente, die die Stege trägt, von der zugewandten Oberfläche der Leiterkarte einen definierten Abstand aufweist. Weiterhin ist die Höhe der Stege so bemessen, dass die Stege mit einem definierten Maß über die Leiterkartenoberfläche aus den Ausnehmungen herausragen. Die Kriechstrecke zwischen zwei benachbarten Lötpads der Anschlussklemmen erstreckt sich somit von einem Lötpad über die Leiterkarte, den ev. vorhandenen Verguss in der Ausnehmung, den aus der Leiterkarte herausragenden Steg der länglichen Komponente, den ev. vorhandenen Verguss in der Ausnehmung und die Leiterkarte bis zum benachbarten Lötpad. Durch eine entsprechend abgestimmte Höhe der Stege lässt sich die erforderliche Kriechstrecke zur Erfüllung der jeweiligen Zündschutzart realisieren. Die Höhe der aus der Leiterkarte herausragenden Stege ist so bemessen, dass die erforderliche Kriechstrecke zur Realisierung der gewünschten Zündschutzart vorhanden ist.

Erfindungsgemäß ist zumindest einer der Stege in einem an die Oberfläche der länglichen Komponente angrenzenden Bereich als Anschlagstütze für die Leiterkarte ausgebildet, so dass die Oberfläche der länglichen Komponente, die die Stege trägt, von der zugewandten Oberfläche der Leiterkarte einen definierten Abstand aufweist. Ob eine oder mehrere Anschlagstützen vorgesehen sind, hängt von der Längenausdehnung des länglichen Elements und somit von der Anzahl der Anschlussklemmen ab.

Eine vorteilhafte Ausgestaltung der erfindungsgemäßen Vorrichtung schlägt vor, dass die beiden in den Endbereichen der länglichen Komponente angeordneten Stege jeweils in dem Stegbereich, der in die Ausnehmung hineinragt, als Rastmittel, insbesondere als Schnapphaken, derart ausgestaltet sind, dass die längliche Komponente an der Leiterkarte, bevorzugt lösbar, fixierbar ist.

Erfindungsgemäß ist die Breite und Länge der Ausnehmungen so ausgelegt, dass die Kriechstrecke auf der Leiterkarte um jeweils eine Ausnehmung herum zur Einhaltung der vorgegebenen Zündschutzart ausreichend ist. Darüber hinaus wird vorgeschlagen, dass die Höhe der Stege so ausgelegt ist, dass die Kriechstrecke entlang der Stege zur Einhaltung der vorgegebenen Zündschutzart ausreichend ist. Die Höhe der Stege ist insbesondere so ausgelegt, dass selbst bei Vorhandensein eines Materials - z.B. Vergussmasse - in den Ausnehmungen die Kriechstrecke entlang der Stege zur Einhaltung der vorgegebenen Zündschutzart ausreicht. Das Vorhandensein von Vergussmasse in den im Normalfall mit Luft gefüllten Ausnehmungen ist nicht auszuschließen, wenn sich die Leiterkarte in einem Feldgerätegehäuse befindet und dort in aufrechter Position - also im Wesentlichen vertikal zur Bodenfläche des Feldgerätegehäuses - mit Vergussmasse vergossen ist. Die Gründe hierfür wurden bereits an vorhergehender Stelle genannt.

Zu erwähnen bleibt, dass die längliche Komponente mit Stegen, Schnapphaken und Anschlagstützen aus einem nicht-leifähigen Material, flexiblen Material, bevorzugt aus Kunststoff, gefertigt ist.

Erfindungsgemäß handelt es sich bei der einzuhaltenden Zündschutzart um die Zündschutzart Ex ec - erhöhte Sicherheit. Diese ermöglicht es, die Feldgeräte in einer gasexplosionsgefährdeten Umgebung einzusetzen, da sichergestellt ist, dass bei Zufuhr von Energie oder im Fehlerfall kein Kurzschluss zwischen den Anschlussklemmen auftritt.

Die Erfindung wird anhand der nachfolgenden Figuren näher erläutert. Es zeigt:
Fig. 1: eine perspektivische Ansicht auf die Oberseite einer Leiterkarte mit einer Ausgestaltung der erfindungsgemäßen Vorrichtung,
Fig. 2: eine perspektivische Teilansicht auf die Unterseite der in Fig. 1 dargestellten Leiterkarte,
Fig. 3: eine perspektivische Ansicht einer für die erfindungsgemäße Lösung geeigneten länglichen Komponente,
Fig. 4: einen Längsschnitt durch ein Feldgerätegehäuse mit integrierter Leiterkarte und
Fig. 5: einen Längsschnitt durch das in fig. 4 gezeigte Feldgerätegehäuse mit vergossener Leiterkarte.

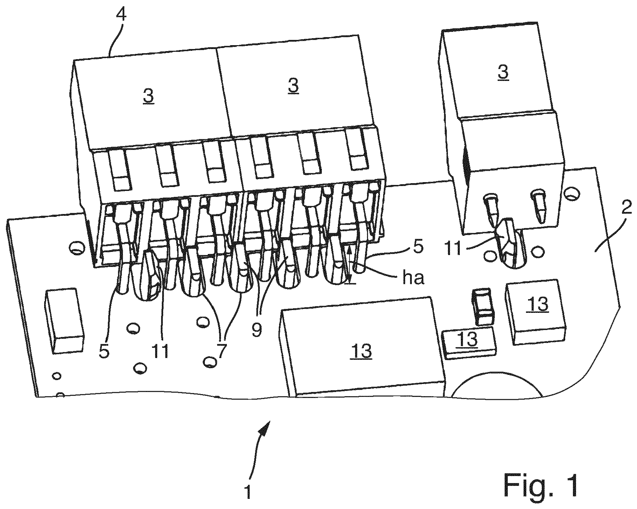

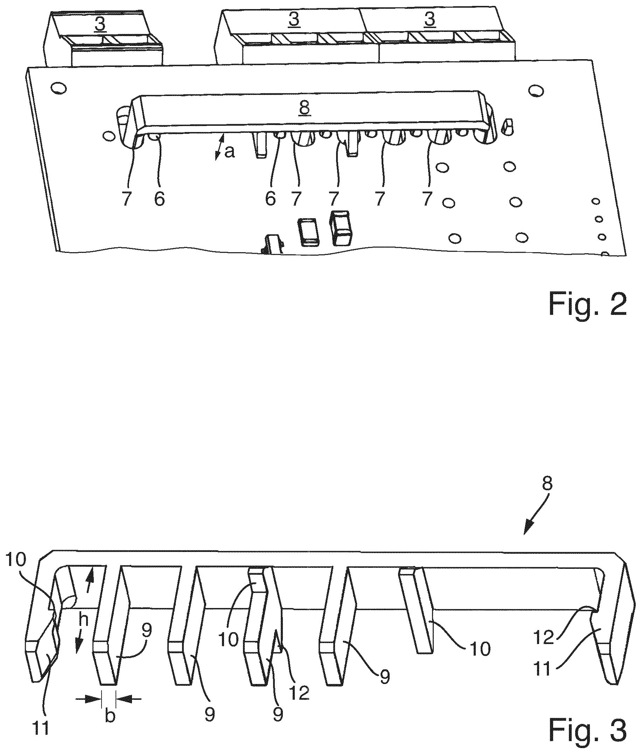

Fig. 1 zeigt eine perspektivische Ansicht auf die Oberseite einer Leiterkarte 2 mit einer Ausgestaltung der erfindungsgemäßen Vorrichtung zum elektrischen Kontaktieren der Steuer-/Auswerteelektronik 1 eines Feldgeräts (nicht dargestellt) der Automatisierungstechnik mit einer externen Energieversorgung und/oder Steuerung (nicht dargestellt). Fig. 2 zeigt eine perspektivische Teilansicht auf die entsprechende Unterseite der Leiterkarte 2. Auf der Leiterkarte 2 sind beispielhaft mehrere elektrische Bauteile 13 angeordnet, deren konkrete Ausgestaltung im Zusammenhang mit der Erfindung jedoch ohne Belang ist. In Fig. 3 ist eine perspektivische Ansicht einer länglichen Komponente zu sehen, wie sie bei der in den Figuren Fig. 1 und Fig. 2 gezeigten Ausgestaltung genutzt wirden kann.

Die Steuer-/Auswerteelektronik 1 des Feldgeräts ist auf einer Leiterkarte 2 angeordnet. Zum Anschluss an die Energieversorgung und/oder Steuerung ist ein mehrteiliges Klemmengehäuse 3 vorgesehen ist, in dem mehrere nebeneinander angeordnete elektrische Anschlussklemmen 4 vorgesehen sind. Die elektrischen Anschlussklemmen 4 dienen zur Aufnahme eines elektrischen Verbindungselements 5. Die elektrischen Verbindungselemente 5 sind jeweils über ein Lötpad bzw. eine elektrische Verbindung mit der Leiterkarte 2 mechanisch und elektrisch verbunden. Zwischen jeweils zwei nebeneinanderliegenden oder benachbarten Lötpads 6 sind in der Leiterkarte 2 Ausnehmungen 7 vorgesehen. Bevorzugt sind die Ausnehmungen 7 als Schlitze ausgestaltet, die in die Leiterkarte 2 gefräst sind. Die Ausnehmungen 7 bzw. die Schlitze sind so dimensioniert, dass die Länge der Kriechstrecke zwischen zwei benachbarten Lötpads 6 eine vorgegebene Zündschutzart erfüllt.

Um mit der zuvor beschriebenen Leiterkarte 2 auch eine höhere Zündschutzart realisieren zu können, ist eine längliche Komponente 8 vorgesehen. Die längliche Komponente 8 weist zwei einander gegenüberliegende Oberflächen auf, wobei an einer der beiden Oberflächen der länglichen Komponente 8 mehrere vertikal ausgerichtete Stege 9 vorgesehen sind. Diese sind so angeordnet und ausgestaltet, dass sie in die korrespondierenden Ausnehmungen 7 der Leiterkarte 2 eingreifen bzw. einführbar sind. Bevorzugt ist die längliche Komponente 8 lösbar mit der Leiterkarte 2 verbindbar. Insbesondere weist die längliche Komponente 8 hierzu in ihren Endbereichen jeweils einen flexiblen Schnapphaken 11 auf, der durch die entsprechende Ausnehmung 7 geführt wird und an der Oberfläche der Leiterkarte 2 einrastet. Die Länge der Ausnehmungen 7 korrespondiert passgenau mit der Länge der Stege 9, während die Breite der Stege 9 kleiner ist als die Breite der Ausnehmungen 7.

Um sicherzustellen, dass die Stege 9 im montierten Zustand mit einer definierten Höhe über die Leiterkarte 2 hinausragen, ist neben den Anschlagflächen 12 an den Schnapphaken 11 zumindest eine Anschlagstütze 10 mit einer Anschlagfläche 12 vorgesehen. Additiv oder alternativ kann übrigens auch zumindest einer der Stege 9 so ausgestaltet sein, dass er eine Anschlagstütze 10 aufweist. Die Anschlagflächen 12 der Schnapphaken 11 und die Anschlagfläche 12 der Anschlagstütze(n) 10 liegen bei montierter länglicher Komponente 8 an den beiden gegenüberliegenden Oberflächen der Leiterkarte 2 an. Die längliche Komponente 8 ist über die zuvor genannten gegenüberliegenden Anschlagflächen 12 sicher an der Leiterkarte 2 fixiert.

Die Oberfläche der länglichen Komponente 8, die die Stege 9 trägt, ist von der zugewandten Oberfläche der Leiterkarte 2 definiert beabstandet. Folglich ist auch sichergestellt, dass die Stege 9 mit einer definierten Höhe ha über die Leiterkarte 2 hinausragen.

Die Breite b und die Länge l der Ausnehmungen 7 ist erfindungsgemäß so ausgelegt ist, dass die Kriechstrecke auf der Leiterkarte 2 um jeweils einen Steg 9 herum zur Einhaltung der vorgegebenen Zündschutzart ausreichend ist.

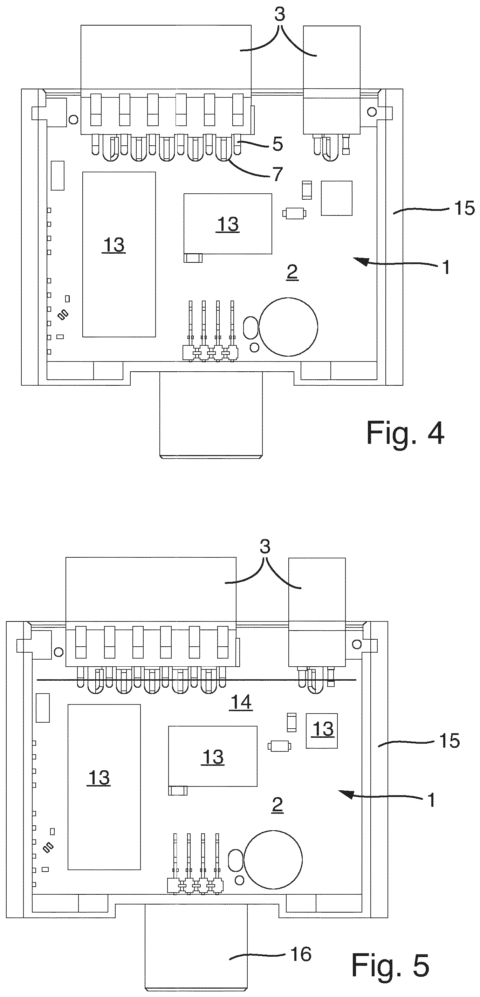

Fig. 4 zeigt einen Längsschnitt durch ein Feldgerätegehäuse 15 mit vertikal integrierter Leiterkarte 2. In Fig. 5 ist das Feldgerätegehäuse 15 mit einer Vergussmasse 14 bis zur durchgezogenen Linie gefüllt. Wie bereits erwähnt, ist an der Oberfläche der länglichen Komponente 8, an der die Stege 9 angeordnet sind, zumindest eine Anschlagstütze 10 zur Anlage an der Leiterkarte 2 vorgesehen ist. Die Anschlagstütze 10 ist so ausgestaltet, dass die Oberfläche der länglichen Komponente 8, die die Stege 9 trägt, von der zugewandten Oberfläche der Leiterkarte 2 einen definierten Abstand aufweist. Weiterhin ist die Höhe h der Stege 9 so bemessen, dass sie im montierten Zustand mit einem definierten Maß ha über die gegenüberliegende Oberfläche der Leiterkarte 2 hinausragen. Die Kriechstrecke zwischen zwei benachbarten Lötpads 6 der Anschlussklemmen 3 erstreckt sich somit von einem Lötpad 6 über die Leiterkarte 2, den entsprechenden Verguss 14 in der Ausnehmung 7 zum Steg 9, den aus der Leiterkarte 2 herausragenden Bereich des Stegs 9, den entsprechenden Verguss 14 in der Ausnehmung 7 und die Leiterkarte 2 bis zum benachbarten Lötpad 6. Durch die zuvor beschriebene Ausgestaltung der länglichen Komponente 8 lässt sich die Höhe ha der aus der Leiterkarte 2 herausragenden Stege 9 so auslegen, dass die gewünschte Zündschutzart realisiert ist.

Es handelt sich bei der einzuhaltenden Zündschutzart um die Zündschutzart Ex ec - erhöhte Sicherheit. Diese ermöglicht es, die Feldgeräte in einer gasexplosionsgefährdeten Umgebung einzusetzen, da sichergestellt ist, dass kein Kurzschluss zwischen den Anschlussklemmen 4 auftritt.

### Bezugszeichenliste

- 1: Steuer-und/oder Auswerteelektronik
- 2: Leiterkarte
- 3: Klemmgehäuse
- 4: Anschlussklemme
- 5: elektrisches Verbindungselement
- 6: Lödpad oder elektrische Verbindungsstelle auf der Leiterkarte
- 7: Ausnehmung oder Schlitz
- 8: längliche Komponente
- 9: Steg
- 10: Anlagestütze
- 11: Schnapphaken / flexibles Halteelement
- 12: Anschlagfläche für Leiterkarte
- 13: elektrisches Bauteil
- 14: Verguss / Vergussmasse
- 15: Feldgerätegehäuse

## Patentansprüche

1. Vorrichtung zum elektrischen Kontaktieren der Steuer-/Auswerteelektronik (1) eines Feldgeräts der Automatisierungstechnik mit einer externen Energieversorgung und/oder Steuerung und einer Leiterkarte (2), wobei die Steuer-/Auswerteelektronik (1) des Feldgeräts auf der Leiterkarte (2) angeordnet ist, wobei zumindest ein Klemmengehäuse (3) vorgesehen ist, in dem mehrere nebeneinander angeordnete elektrische Anschlussklemmen (4) vorgesehen sind, wobei die elektrischen Anschlussklemmen (4) jeweils zur Aufnahme eines elektrischen Verbindungselements (5) dienen, wobei die elektrischen Verbindungselemente (5) über jeweils ein Lötpad (6) mit der Leiterkarte (2) mechanisch und elektrisch verbunden sind, und wobei jeweils zwischen zwei Lötpads (6) in der Leiterkarte (2) Ausnehmungen (7) vorgesehen sind, die so ausgestaltet sind, dass die Länge der Kriechstrecke zwischen den Lötpads (6) eine vorgegebene Zündschutzart erfüllt,
wobei es sich bei der Zündschutzart um die Zündschutzart Ex ec - erhöhte Sicherheit - handelt,
wobei eine längliche Komponente (8) mit zwei einander gegenüberliegenden Oberflächen vorgesehen ist,
wobei an einer der beiden Oberflächen der länglichen Komponente (8) Stege (9) vorgesehen sind, die so angeordnet und ausgestaltet sind, dass sie in die Ausnehmungen (7) der Leiterkarte (2) eingreifen bzw. einführbar sind, **dadurch gekennzeichnet, dass**
an der länglichen Komponente (8) auf der Oberfläche, an der die Stege (9) angeordnet sind, zumindest eine Anschlagstütze (10) für die Leiterkarte (2) vorgesehen ist und dass die Anschlagstütze (10) so ausgestaltet ist, dass die Oberfläche der länglichen Komponente (8), die die Stege (9) trägt, von der zugewandten Oberfläche der Leiterkarte (2) einen definierten Abstand aufweist, und/oder
dass zumindest einer der Stege (9) in einem an die Oberfläche der länglichen Komponente (8) angrenzenden Bereich als Anschlagstütze (10) für die Leiterkarte (2) ausgebildet ist, so dass die Oberfläche der länglichen Komponente (8), die die Stege (9) trägt, von der zugewandten Oberfläche der Leiterkarte (2) den definierten Abstand aufweist.

2. Vorrichtung nach Anspruch 1,
wobei es sich bei den Ausnehmungen (7) um Schlitze handelt, die in die Leiterkarte (2) gefräst sind.

3. Vorrichtung nach einem der vorhergehenden Ansprüche,
dass die beiden in den Endbereichen der länglichen Komponente (8) angeordneten Stege (9) jeweils in dem Stegbereich, der in die Ausnehmung hineinragt, als Schnapphaken (11) derart ausgestaltet sind, dass die längliche Komponente (8) an der Leiterkarte (2), bevorzugt lösbar, fixierbar ist.

4. Vorrichtung nach einem der vorhergehenden Ansprüche ,
wobei die Breite (b) der Ausnehmungen (7) und Stege (9) so ausgelegt ist, dass die Kriechstrecke auf der Leiterkarte (2) um jeweils eine Ausnehmung (7) oder um einen Steg (9) herum zur Einhaltung der vorgegebenen Zündschutzart ausreichend ist.

5. Vorrichtung nach einem der vorhergehenden Ansprüche ,
wobei die Höhe (h) der Stege (9) so ausgelegt ist, dass die Kriechstrecke entlang der Stege (9) zur Einhaltung der vorgegebenen Zündschutzart ausreichend ist.

6. Vorrichtung nach einem der vorhergehenden Ansprüche ,
wobei die längliche Komponente (8) mit Stegen (9), Schnapphaken (11) und Anschlagstützen (10, 10a) aus einem nicht-leifähigen Material, flexiblen Material, bevorzugt aus Kunststoff, gefertigt ist.

## Claims

1. Device for electrically connecting the control/evaluation electronics (1) of a field device used in automation technology to an external power supply and/or control system and a circuit board (2), wherein the control/evaluation electronics (1) of the field device are arranged on the printed circuit board (2), wherein at least one terminal housing (3) is provided, in which several electrical connection terminals (4) arranged next to each other are provided, wherein the electrical connection terminals (4) each serve to accommodate an electrical connecting element (5), wherein the electrical connecting elements (5) are mechanically and electrically connected to the printed circuit board (2) via a respective solder pad (6), and wherein recesses (7) are provided between each two solder pads (6) in the printed circuit board (2) are provided between two solder pads (6) in the printed circuit board (2), which are designed in such a way that the creepage distance between the solder pads (6) meets a specified type of ignition protection,
wherein the type of ignition protection is the type of ignition protection Ex ec - increased safety-
wherein an elongated component (8) with two opposing surfaces is provided,
wherein webs (9) are provided on one of the two surfaces of the elongated component (8), which are arranged and designed so that they engage or can be inserted into the recesses (7) of the circuit board (2),
**characterized in that**
at least one stop support (10) for the circuit board (2) is provided on the elongated component (8) on the surface on which the webs (9) are arranged, and that the stop support (10) is designed such that the surface of the elongated component (8) carrying the webs (9) is at a defined distance from the facing surface of the printed circuit board (2), and/or
at least one of the webs (9) is designed as a stop support (10) for the circuit board (2) in an area adjacent to the surface of the elongated component (8), so that the surface of the elongated component (8) carrying the webs (9) is at the defined distance from the facing surface of the circuit board (2).

2. Device according to claim 1,
wherein the recesses (7) are slots milled into the circuit board (2).

3. Device according to one of the preceding claims,
wherein the two webs (9) arranged in the end regions of the elongated component (8) are each designed as snap hooks (11) in the web region that protrudes into the recess, such that the elongated component (8) can be preferably detachably, to the printed circuit board (2).

4. Device according to one of the preceding claims,
wherein the width (b) of the recesses (7) and webs (9) is designed such that the creepage distance on the printed circuit board (2) around each recess (7) or web (9) is sufficient to comply with the specified type of ignition protection.

5. Device according to one of the preceding claims,
wherein the height (h) of the webs (9) is designed such that the creepage distance along the webs (9) is sufficient to comply with the specified type of ignition protection.

6. Device according to one of the preceding claims,
wherein the elongated component (8) with webs (9), snap hooks (11) and stop supports (10, 10a) is made of a non-conductive material, flexible material, preferably plastic.

## Revendications

1. Dispositif pour établir un contact électrique entre le système électronique de commande/d'évaluation (1) d'un appareil de terrain utilisé dans le domaine de l'automatisation et une alimentation électrique et/ou une commande externe et une carte de circuit imprimé (2), le système électronique de commande/d'évaluation (1) de l'appareil de terrain étant disposé sur la carte de circuit imprimé (2), au moins un boîtier de bornes (3) étant prévu, dans lequel sont prévues plusieurs bornes de raccordement électriques (4) disposées les unes à côté des autres, les bornes de raccordement électriques (4) servant chacune à recevoir un élément de connexion électrique (5), les éléments de connexion électriques (5) étant reliés mécaniquement et électriquement à la carte de circuit imprimé (2) par l'intermédiaire d'un plot de soudure (6) respectif, et des évidements (7) étant prévus respectivement entre deux plots de soudure (6) dans la carte de circuit imprimé (2) sont prévus des évidements (7) qui sont conçus de telle sorte que la longueur du chemin de fuite entre les pastilles de soudure (6) réponde à un type de protection contre l'inflammation prédéfini,
le type de protection contre l'inflammation étant le type de protection contre l'inflammation Ex ec - sécurité augmentée -
un composant allongé (8) avec deux surfaces opposées étant prévu,
des nervures (9) étant prévues sur l'une des deux surfaces du composant allongé (8), lesquelles sont disposées et conçues de manière à s'engager ou à pouvoir être insérées dans les évidements (7) de la carte de circuit imprimé (2),
**caractérisé en ce que**
sur le composant allongé (8), sur la surface sur laquelle sont disposées les nervures (9), au moins un support de butée (10) pour la carte de circuit imprimé (2) est prévu et que le support de butée (10) est conçu de telle sorte que la surface du composant allongé (8) qui porte les nervures (9) présente un écart défini par rapport à la surface tournée vers elle de la carte de circuit imprimé (2), et/ou
au moins l'une des nervures (9) est conçue comme support de butée (10) pour la carte de circuit imprimé (2) dans une zone adjacente à la surface du composant allongé (8), de sorte que la surface du composant allongé (8) qui porte les nervures (9) présente la distance définie par rapport à la surface en regard de la carte de circuit imprimé (2).

2. Dispositif selon la revendication 1,
les évidements (7) étant des fentes fraisées dans la carte de circuit imprimé (2).

3. Dispositif selon l'une des revendications précédentes,
dans lequel les deux nervures (9) disposées dans les zones d'extrémité du composant allongé (8) sont chacune conçues, dans la zone de nervure qui s'engage dans l'évidement, comme des crochets d'encliquetage (11) de telle sorte que le composant allongé (8) de préférence de manière amovible, sur la carte de circuit imprimé (2).

4. Dispositif selon l'une des revendications précédentes,
la largeur (b) des évidements (7) et des nervures (9) étant conçue de telle sorte que la distance de fuite sur la carte de circuit imprimé (2) autour de chaque évidement (7) ou de chaque nervure (9) soit suffisante pour respecter le type de protection contre l'inflammation spécifié.

5. Dispositif selon l'une des revendications précédentes,
la hauteur (h) des nervures (9) étant conçue de telle sorte que la ligne de fuite le long des nervures (9) soit suffisante pour respecter le type de protection contre l'inflammation prescrit.

6. Dispositif selon l'une des revendications précédentes ,
dans lequel le composant allongé (8) avec des nervures (9), des crochets à encliquetage (11) et des supports de butée (10, 10a) est fabriqué dans un matériau non conducteur, un matériau flexible, de préférence en plastique.
